# EUROPEAN PATENT APPLICATION

(11) **EP 2 634 192 A1**
(43) Date of publication of application: **04.09.2013**
(21) Application number: 11835623.7
(22) Date of filing: 26.10.2011
(51) Int. Cl.: C07F 9/655

(54) **PREPARATION METHOD OF FOSAMPRENAVIR DERIVATIVES AND RELEVANT INTERMEDIATE THEREOF**

(30) Priority: 29.10.2010 CN 201010525670
(71) Applicant: Zhejiang Jiuzhou Pharma Science & Technology Co., Ltd., Hangzhou, Zhejiang 310051 (CN)
(72) Inventor: XU, Jiankang, Taizhou Zhejiang 318000 (CN); YE, Meiqi, Taizhou Zhejiang 318000 (CN); CHEN, Bin, Taizhou Zhejiang 318000 (CN); XU, Qiaoqiao, Taizhou Zhejiang 318000 (CN)
(74) Representative: von Kreisler Selting Werner
(86) International application number: PCT/CN2011/081322
(87) International publication number: WO 2012/055350

(57) **Abstract**

Preparation method of fosamprenavir derivatives is disclosed. The compound shown by formula II or its ammonium salt is reacted with a metal ion source in solvent to obtain the compound shown by formula III. After isolating and purifying, the compound shown by formula III is catalytically reduced to the compound shown by formula I. In the formula, X is metal ion. Preferably, the metal ion source is a calcium ion source, sodium ion source, or potassium ion source, and X is calcium ion, sodium ion, or potassium ion. The solvent is methanol, ethanol, n-propanol, iso-propanol, n-butanol, or sec-butanol. The catalytic reduction is carried out by using hydrogen as a reducing agent in the presence of palladium on carbon catalyst. The ammonium salt is methylamine salt, dimethylamine salt, ethylamine salt, diethylamine salt, isopropylamine salt, dibutylamine salt, dipropylamine salt, t-butylamine salt, or dicyclohexylamine salt. The relevant intermediate of fosamprenavir derivatives in the preparation method is also provided. The preparation method of fosamprenavir derivatives reduces the cost, improves the productivity, and is applicable for large-scale popularization and application.

## Description

This application claims the priority of China Patent Application No.201010525670.7, filed with the Patent Office of China on October 29, 2010, titled "PREPARATION METHOD OF FOSAMPRENAVIR DERIVATIVES AND RELEVANT INTERMEDIATE THEREOF", the contents of which are incorporated herein by reference in its entirety.

### FIELD OF THE INVENTION

The present invention relates to the technical field of fosamprenavir derivatives, particularly to the technical field of the preparation of fosamprenavir derivatives, specifically refers to a method for preparing fosamprenavir derivatives and relevant intermediate thereof.

### BACKGROUND OF THE INVENTION

Fosamprenavir calcium, trade name: LEXIVA, chemical name: [(3 S)-oxolan-3-yl]N-(2S,3R)-4-[(4-aminophenyl)sulfonyl-(2-methylpropyl)amino ]-1-phenyl-3-phosphonooxy-butan-2-yl]carbamate calcium salt, the structural formula thereof is shown in the following formula I, wherein X is calcium ion:

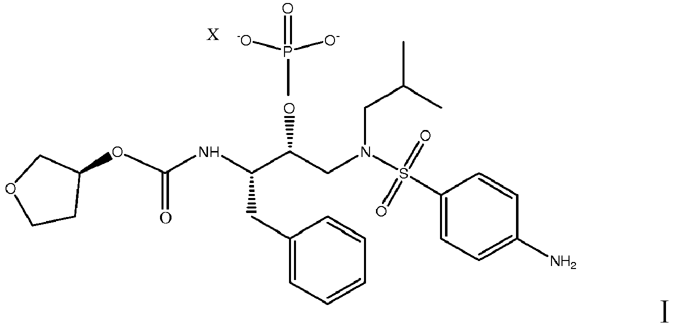

Fosamprenavir calcium, cooperatively developed by GlaxoSmithKline (GSK) and Vertex Pharmaceuticals, is a prodrug of amprenavir (APV, Agenerase) which is an inhibitor of HIV protease. After the phosphorylation of APV followed by preparing into a calcium salt, the solubility thereof in water at 25°C increases from 0.04 mg/ml to 100 mg/ml, which facilitates its absorption in the gastrointestinal tract and rapid conversion into ATV Fosamprenavir calcium tablet 700 mg (regardless of the calcium salt) was approved by US FDA for marketing on October 20, 2003, and fosamprenavir calcium oral suspension 50 mg/ml (regardless of the calcium salt) was approved on June 14, 2007. For untreated adult patients, they orally take FPV 1400mg (bid), or FPV 1400 mg plus RTV 200 mg (qd). For patients having treatment history, they orally take FPV 1400 mg plus RTV 200 mg (bid). So far, FPV has been approved for marketing by more than 30 countries in European Union, South America and Africa, and is used clinically for the treatment of HIV infection and AIDS. China Patent ZL99810838.3 will expiry on July 15, 2019. PCT patent WO2000004033 has disclosed the crystal forms of fosamprenavir calcium and preparation processes thereof.

WO2000004033 discloses a method for preparing fosamprenavir calcium: treating (3S)-tetrahydrofuran-3-yl(1S,2R)-3-[(4-nitrophenyl) sulfonyl](isobutyl)amino-1-benzyl-2-(phosphonooxy)propyl-carbamate with palladium on carbon catalyst, then reacting with hydrogen gas at room temperature, filtering and washing, then adding calcium acetate, cooling to crystallize, filtering and washing, drying under vacuum. According to the preparation method provided, the applicant obtained a low yield of 78~79% with high costs.

WO2000004033 also discloses a method for preparing fosamprenavir sodium: reacting (3S)-tetrahydrofuran-3-yl (1S,2R)-3-[(4-nitrophenyl) sulfonyl](isobutyl)amino-1-benzyl-2-(phosphonooxy)propyl-carbamate with sodium hydroxide, then with hydrogen gas at room temperature, filtering and washing, then adding calcium acetate, cooling to crystallize, filtering and washing, drying under vacuum. According to the preparation method provided, the applicant obtained a low yield of 77~79% with high costs.

Moreover, sodium (3S)-tetrahydrofuran-3-yl(1S,2R)-3-[(4-nitrophenyl)-sulfonyl](isobutyl)ami no-1-benzyl-2-(phosphonooxy)propyl-carbamate is soluble in water and ethanol, and calcium (3S)-tetrahydrofuran-3-yl(1S,2R)-3-[(4-nitrophenyl) sulfonyl](isobutyl)amino-1-benzyl-2-(phosphonooxy)propyl-carbamate has an extremely small solubility in water or ethanol.

Therefore, there exists a need to provide a novel method for preparing fosamprenavir derivatives, which can reduce the cost and improve the yield.

### SUMMARY OF THE INVENTION

The objective of the present invention is to overcome the above defects in the prior art, and to provide a method for preparing fosamprenavir derivatives and relevant intermediate thereof, such method for preparing fosamprenavir derivatives reduces the cost, improves the yield, and is suitable for large-scale popularization and application.

To achieve the above objective, in the first aspect, the present invention provides a method for preparing fosamprenavir derivatives, characterized in that, the compound of formula II or the ammonium salt thereof is reacted with a metal ion source in solvent to obtain the compound of formula III, which is then catalytically reduced to the compound of formula I,

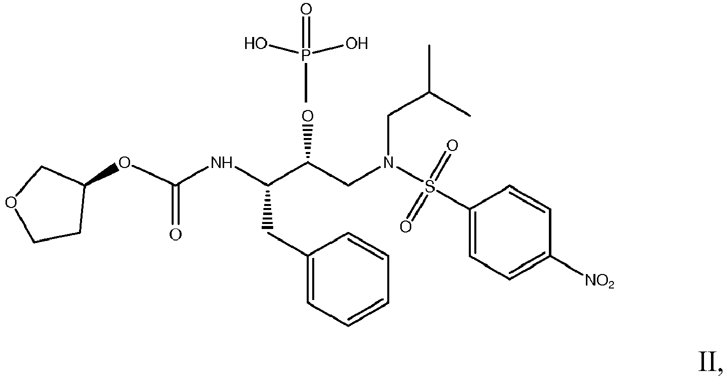

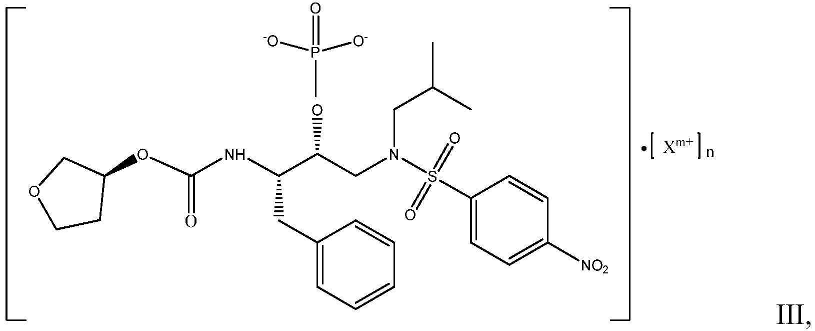

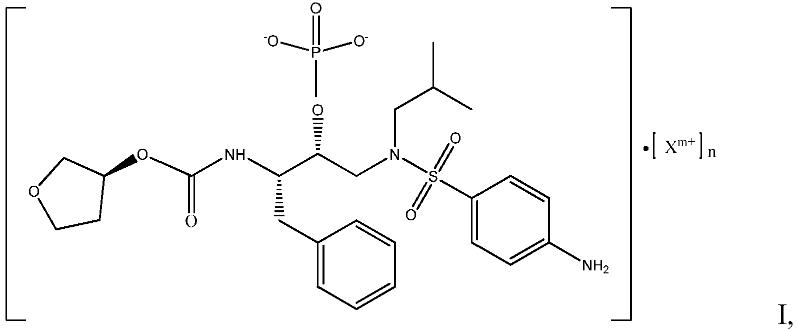

Wherein, the X is a metal ion, m represents the valence number of the metal ion, m*n=2.

Preferably, the metal ion source is calcium ion source, sodium ion source or potassium ion source, and the X is calcium ion, sodium ion or potassium ion, and the solvent is methanol, ethanol, n-propanol, iso-propanol, n-butanol or sec-butanol.

More preferably, the calcium ion source is calcium acetate, and the sodium ion source is sodium bicarbonate, sodium carbonate, sodium acetate or sodium hydroxide, and the potassium ion source is potassium bicarbonate, potassium carbonate or potassium hydroxide.

Preferably, the catalytic reduction was carried out in the presence of palladium on carbon catalyst, using hydrogen as reducing agent.

Preferably, the ammonium salt thereof is methylamine salt, dimethylamine salt, ethylamine salt, diethylamine salt, isopropylamine salt, dibutylamine salt, dipropylamine salt, t-butylamine salt or dicyclohexyamine salt.

More preferably, the compound of formula I is calcium (3S)-tetrahydrofuran-3-yl(S,2R)-3-[(4-aminophenyl)sulfonyl](isobutyl) amino-1-benzyl-2-(phosphonooxy)propyl-carbamate, sodium (3S)-tetrahydrofuran-3-yl(1S,2R)-3-[(4-aminophenyl)sulfonyl](isobutyl)]amino-1 -benzyl-2-(phosphonooxy)propyl-carbamate, or potassium (3S)-tetrahydrofuran-3-yl(1S,2R)-3-[(4-aminophenyl)sulfonyl](isobutyl)amino-1-benzyl-2-(phosphonooxy)propyl-carbamate.

In the second aspect, the present invention provides an intermediate for the preparation of fosamprenavir derivatives, characterized in that, the intermediate has the following structural formula of formula III:

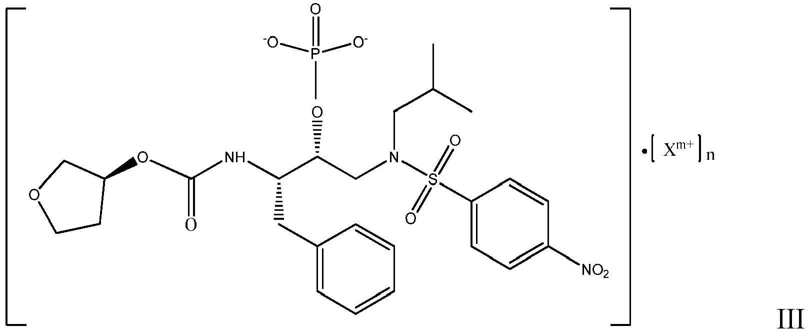

Wherein, the X is calcium ion, m is 2, n is 1.

The invention has the following specific advantageous effects: in the present invention, the compound of formula II or the ammonium salt thereof is reacted with a metal ion source in solvent to obtain the compound of formula III; after isolating and purifying, then the compound of formula III is catalytically reduced to the compound of formula I. Such method reduces the cost, improves the yield, and is suitable for large-scale popularization and application.

### DETAILED EMBODIMENTS

In order to better understand the present invention, it is illustrated in detail by the following examples. However, it should be understood that these descriptions are only intended to further illustrate the characteristics and advantages of the present invention, but not to limit the claims of the present invention.

### Example 1

15 g (3S)-Tetrahydrofuran-3-yl(1S,2R)-3-[(4-aminophenyl)sulfonyl] (isobutyl)amino-1-benzyl-2-(phosphonooxy)propyl-carbamate was dissovled in 45 ml methanol, and heated to 55°C. A mixed solution consisted of 4.2 g calcium acetate monohydrate and 150 ml water was added dropwise. After completing the dropwise addition, the mixture was kept at 55°C for half an hour, cooled to 20°C, filtrated and dried.

The dried product was dissolved in 200 ml methanol, and then 0.3 g 10% Pd/C was added. The mixture was stirred for 20 h under hydrogen atmosphere. Then the catalyst was filtered out.

After being concentrated to 100 ml under reduced pressure, the filtrate was added dropwise into 150 ml water for the crystallization. After completing the dropwise addition, the reaction mixture was stirred for half an hour at room temperature, and then filtrated and dried in vacuum to obtain 13.2 g calcium (3S)-tetrahydrofuran-3-yl(1S,2R)-3-[(4-aminophenyl)sulfonyl] (isobutyl)amino-1-benzyl-2-(phosphonooxy)propyl-carbamate. Yield: 89.34%.

### Example 2

10 g (3S)-Tetrahydrofuran-3-yl(1S,2R)-3-[(4-aminophenyl)sulfonyl] (isobutyl)amino-1-benzyl-2-(phosphonooxy)propyl-carbamate was charged into a clean and dry 250 ml four-neck flask, and dissolved by adding 30 ml anhydrous ethanol, and then heated to 50°C. A mixed solution consisted of 2.8 g sodium acetate and 100 ml water was added dropwise. After completing the dropwise addition, the reaction mixture was kept at 50 °C for half an hour, and then the solvent was evaporated to dryness under reduced pressure in a 60 °C water bath. 100 ml Methyl tert-butyl ether was added for beating and crystallization, and then filtrated and dried.

The dried product, 120 ml methanol and 0.2 g 10% Pd/C were charged into a clean and dry autoclave, the autoclave was closed, the air in the autoclave was replaced with nitrogen gas for three times followed by hydrogen gas for three times. After increasing the hydrogen gas pressure up to 1.0 Mpa, the reaction was performed under hydrogen gas at room temperature for 24 h until the compound 2 was reacted completely, the hydrogen gas was vented, the materials were removed and filtrated, and the filtrate was concentrated to dryness under reduced pressure. Then, 60 ml isopropanol was added and heated under reflux to dissolve for 10 min, then cooled to room temperature, and then cooled to 0~5°C and kept for 1 hour, filtrated and dried under vacuum to obtain 7.30 g sodium (3S)-tetrahydrofuran-3-yl(1S,2R)-3-[(4-aminophenyl)sulfonyl](isobutyl) amino-1-benzyl-2-(phosphonooxy)propyl-carbamate. Yield: 88.35%.

### Example 3

10.5 g Diethylamine salt of (3S)-Tetrahydrofuran-3-yl(1S,2R)-3-[(4-nitrophenyl)sulfonyl](isobutyl)amino-1-benzyl-2-(phosphonooxy)propyl -carbamate was dissolved in 30 ml anhydrous ethanol and heated to 50°C. A mixed solution consisted of 2.8 g calcium acetate monohydrate and 100 ml water was added dropwise. After completing the dropwise addition, the mixture were kept at 50 °C for half an hour, then cooled to room temperature, filtrated and dried.

The dried product was dissolved in 120 ml propanol and 0.2 g 10% Pd/C, the autoclave was closed, the air in the autoclave was replaced with nitrogen gas for three times followed by hydrogen gas for three times. After increasing the hydrogen gas pressure up to 1.0 Mpa, the reaction was performed under hydrogen gas at room temperature for 24 h. After the completion of the reaction, the hydrogen gas was vented, the materials were removed, filtrated, and the filtrate was evaporated under reduced pressure to 60 ml, and added dropwise into 100 ml water for the crystallization, and then stirred at room temperature for half an hour, filtered, and dried under vacuum to obtain 8.9 g calcium (3 S)-tetrahydrofuran-3-yl(1S,2R)-3-[(4-aminophenyl) sulfonyl](isobutyl)amino-1-benzyl-2-(phosphonooxy)propyl-carbamate. Yield: 90.23%.

### Example 4

10 g (3S)-Tetrahydrofuran-3-yl(1S,2R)-3-[(4-nitrophenyl)sulfonyl] (isobutyl)amino-1-benzyl-2-(phosphonooxy)propyl-carbamate (II) was charged into a clean and dry 250 ml four-neck flask, and dissolved by adding 30 ml methanol, and heated to 50°C. A mixed solution consisted of 2.8 g calcium acetate monohydrate and 100 ml water was added dropwise. After completing the dropwise addition, the mixture were kept at 50°C for half an hour, cooled to 20 °C, filtrated, and dried to obtain 8.3 g calcium (3S)-tetrahydrofuran-3-yl(1S,2R)-3-[(4-nitrophenyl)sulfonyl](isobutyl)amin o-1-benzyl-2-(phosphonooxy)propyl-carbamate (III). Yield: 96.74%.

### Example 5

10 g (3S)-Tetrahydrofuran-3-yl(1S,2R)-3-[(4-nitrophenyl) sulfonyl] (isobutyl)amino-1-benzyl-2-(phosphonooxy)propyl-carbamate (II) was charged into a clean and dried 250 ml four-neck flask, and dissolved by adding 30 ml methanol, and heated to 55°C. A mixed solution consisted of 2.0 g sodium acetate and 100 ml water was added dropwise. After completing the dropwise addition, the mixture were kept at 55°C for half an hour, the solvent was evaporated to dryness under reduced pressure in a 60°C water bath. 100 ml Methyl tert-butyl ether was added for beating and crystallization, and then filtrated and dried to obtain 8 g sodium (3S)-tetrahydrofuran-3-yl(1S,2R)-3-[(4-nitrophenyl)sulfonyl](isobutyl)amin o-1-benzyl-2-(phosphonooxy)propyl-carbamate (III). Yield: 92.41%.

In the present invention, the compound of formula II or the ammonium salt thereof such as methylamine salt, dimethylamine salt, ethylamine salt, diethylamine salt, isopropylamine salt, dibutylamine salt, dipropylamine salt, t-butylamine salt or dicyclohexyamine salt is dissolved in an appropriate solvent such as methanol, ethanol, n-propanol, iso-propanol or industrial methylated spirits, and water and alkali metal ion source such as calcium acetate, sodium hydroxide and potassium hydroxide, and reacted by catalytic reduction, in the presence of an appropriate reducing agent (such as hydrogen) and palladium on carbon catalyst, to obtain the compound of formula III, wherein X is alkali metal ion such as calcium ion, sodium ion and potassium ion.

In summary, the method for preparing fosamprenavir derivatives of the present invention reduces the cost, improves the yield, and is suitable for large-scale popularization and application.

In the specification, the present invention has been described with reference to particular examples thereof. However, it is obvious to a skilled in the art that various modifications and alterations can be made without departing from the spirit and scope of the present invention. Therefore, the specification and drawings should be considered to be illustrative, rather than limiting.

## Claims

1. A method for preparing fosamprenavir derivatives, **characterized in that**, the compound of formula II or the ammonium salt thereof is reacted with a metal ion source in solvent to obtain the compound of formula III; after isolating and purifying, the compound of formula III was catalytically reduced to the compound of formula I, 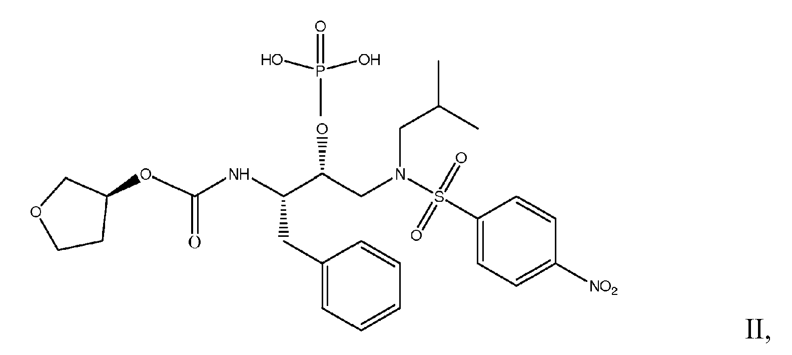 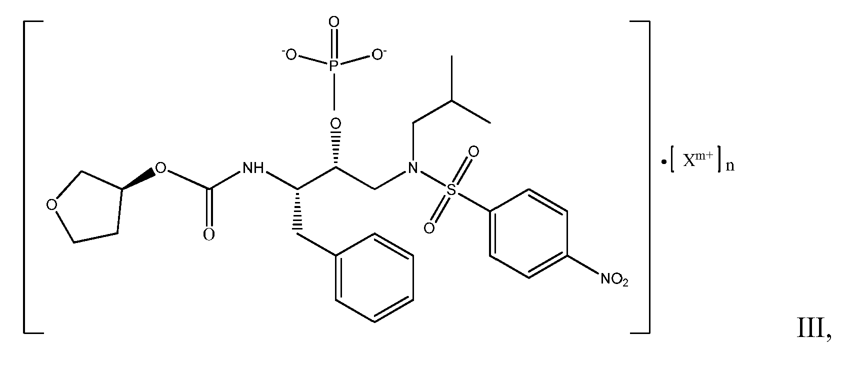 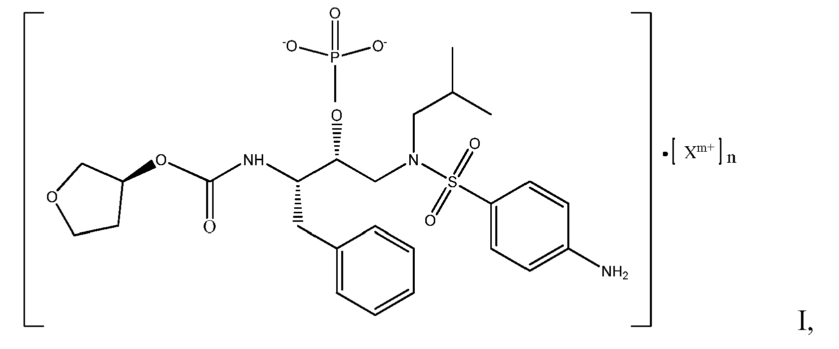 Wherein, the X is a metal ion, m represents the valence number of the metal ion, m*n=2.

2. The method for preparing fosamprenavir derivatives according to claim 1, **characterized in that**, the metal ion source is calcium ion source, sodium ion source or potassium ion source, and the X is calcium ion, sodium ion or potassium ion, the solvent is methanol, ethanol, n-propanol, iso-propanol, n-butanol or sec-butanol.

3. The method for preparing fosamprenavir derivatives according to claim 2, **characterized in that**, the calcium ion source is calcium acetate, the sodium ion source is sodium bicarbonate, sodium carbonate, sodium acetate or sodium hydroxide, the potassium ion source is potassium bicarbonate, potassium carbonate or potassium hydroxide.

4. The method for preparing fosamprenavir derivatives according to claim 1, **characterized in that**, the catalytic reduction was carried out in the presence of palladium on carbon catalyst, using hydrogen as reducing agent.

5. The method for preparing fosamprenavir derivatives according to claim 1, **characterized in that**, the ammonium salt is methylamine salt, dimethylamine salt, ethylamine salt, diethylamine salt, isopropylamine salt, dibutylamine salt, dipropylamine salt, t-butylamine salt or dicyclohexyamine salt.

6. An intermediate for preparing fosamprenavir derivatives, **characterized in that**, the intermediate has the following structural formula of formula III: 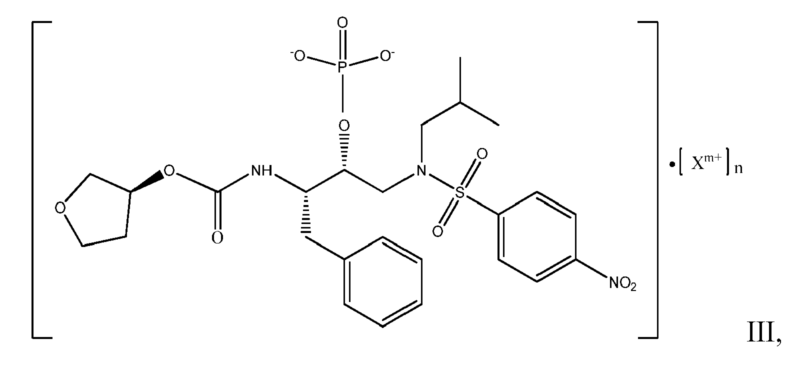 Wherein, the X is calcium ion, m is 2, and n is 1.
